# FASCICULE DE BREVET EUROPEEN

(11) **EP 0 725 731 B1**
(45) Date de publication et mention de la délivrance du brevet: **08.04.1998**
(21) Numéro de dépôt: 94931062.7
(22) Date de dépôt: 13.10.1994
(51) Int. Cl.: B32B 31/30, B32B 27/12, D06N 3/00, D06N 3/04

(54) **PROCEDE DE REALISATION D'UNE FEUILLE SOUPLE, ETANCHE, CONSTITUEE PAR UN SUPPORT TEXTILE REVETU SUR SES DEUX FACES D'UNE COUCHE D'ENDUCTION A BASE DE POLYPROPYLENE**
VERFAHREN ZUR HERSTELLUNG VON BIEGSAMER, DICHTER FOLIE BESTEHEND AUS EINEM BEIDSEITIG MIT POLYPROPYLEN BESCHICHTETEN TEXTILSUPPORT
METHOD FOR MAKING A FLEXIBLE, FLUID-TIGHT SHEET COMPRISED OF A TEXTILE SUPPORT COATED ON BOTH FACES WITH A POLYPROPYLENE-BASED COATING LAYER

(30) Priorité: 28.10.1993 FR 9313088; 16.11.1993 FR 9313908
(43) Date de publication de la demande: 14.08.1996
(73) Titulaire: TEXTILES ET PLASTIQUES CHOMARAT (Société anonyme), 07160 Le Cheylard (FR)
(72) Inventeur: SANIAL, Philippe, F-07160 Le Cheylard (FR); BACCUS, Gérard, F-07160 Accons (FR); CLEDAT, Bruno, F-07160 Le Cheylard (FR)
(74) Mandataire: Vuillermoz, Bruno
(86) Numéro de dépôt international: FR9401189
(87) Numéro de publication internationale: WO9511803

(56) Documents cités:
- EP-A- 0 208 627
- EP-A- 0 395 381
- FR-A- 1 245 513
- FR-A- 1 359 975
- FR-A- 2 131 836
- FR-A- 2 358 439
- FR-A- 2 385 769
- US-A- 4 211 692
- US-A- 4 255 323
- US-A- 4 370 187

## Description

La présente invention concerne un procédé perfectionné permettant la réalisation de feuilles souples, étanches, se présentant sous la forme d'un complexe constitué par un support textile revêtu sur ses deux faces d'une couche d'enduction, l'enduit de surface étant à base d'une composition contenant du polypropylène, l'association dudit support avec son revêtement étant réalisée par calandrage immédiatement en aval d'un ensemble extrudant la composition sous forme de film.

Elle a trait plus particulièrement à un procédé perfectionné qui permet d'utiliser des compositions dans lesquelles le polypropylène est associé à d'autres composants conférant des propriétés spécifiques, telles que par exemple très bonne résistance au feu, étanchéité aux gaz et résistance à l'action d'agents chimiques corrosifs, et qui à ce jour, sont en général utilisés pour réaliser des objets moulés, extrudés.

Dans de nombreux secteurs techniques, on se trouve confronté aux problèmes d'avoir à réaliser des équipements parfaitement étanches aux gaz, résistant à l'action de produits chimiques et/ou à la chaleur et à la flamme, et qui impliquent pour leur réalisation l'utilisation de matériaux se présentant sous la forme de feuilles souples, facilement conformables, par exemple sous la forme de conduites, tuyaux, gaines, conteneurs, vêtements de protection (combinaisons, scaphandres..), dont les caractéristiques sont adaptées en fonction de leur destination, et ne doivent pas se dégrader dans le temps.

Il a été ainsi proposé depuis fort longtemps de réaliser de telles feuilles souples, étanches, par enduction d'un support textile (tissus, tricots, non tissés), l'enduction étant réalisée en général sur les deux faces dudit support.

A ce jour, différents types de compositions d'enduction sont proposés en fonction des caractéristiques que l'on souhaite conférer au produit.

Selon US-A-4 370 187, les stratifiés sont obtenus par laminage à chaud d'une résine thermoplastique, oxydée préalablement. Selon EP-A-0 208 627, un film thermoplastique est associé par calandrage sur un support, avec insertion d'une grille textile entre ledit support et ledit film thermoplastique.

Ainsi, pour la réalisation de feuilles souples, étanches, résistantes à la chaleur et à la flamme, il a été proposé depuis fort longtemps de réaliser des compositions de PVC ignifugé avec un polymère à fort pourcentage de charge, tel que du trioxyde d'antimoine. Avec de telles compositions, il est possible d'obtenir une très bonne résistance au feu pouvant atteindre le classement M1 selon la classification AFNOR. Par contre, la tenue en température dans le temps est limitée, les caractéristiques mécaniques et la souplesse des produits se dégradant rapidement lorsqu'ils sont soumis pendant une longue durée à une température supérieure à 80°C.

Par ailleurs, pour résoudre ce problème de la résistance au feu et à la température, il a également été envisagé depuis fort longtemps de remplacer le PVC par d'autres polymères présentant de telles caractéristiques, par exemple des caoutchoucs naturels ou synthétiques, qui permettent également de réaliser des vêtements de protection (combinaisons, scaphandres) qui sont utilisés dans des milieux agressifs (milieux acides), nocifs ou contaminés ainsi que cela ressort notamment du FR-A-2 131 836.

De tels structures enduites présentent cependant comme inconvénient de ne pas pouvoir être soudés thermiquement et il est donc délicat de les conformer sous forme de conduites, tuyaux, gaines ou vêtements de protection, les méthodes de fabrication nécessitant des opérations de collage ou de post-vulcanisation.

Il a également été envisagé depuis fort longtemps, comme cela ressort notamment du FR-A-1 245 513 (correspondant à l'US-A-3 058 863) de réaliser des feuilles souples, étanches, qui se présentent sous la forme d'un complexe constitué par un support textile pouvant être revêtu sur ses deux faces d'une couche d'enduction, l'enduit de surface étant à base de polyéthylène, l'association dudit support avec son revêtement étant réalisée par calandrage immédiatement en aval de l'ensemble extrudant la composition sous forme de film.

Ainsi que cela ressort de ce document, on peut aussi obtenir un complexe qui se colle à chaud et garde sa souplesse même aux basses températures.

En revanche, et cela est clairement indiqué dans le préambule de ce document, de telles pellicules de polyéthylène ne peuvent être associées qu'à des supports textiles également à base de polyéthylène ou de polypropylène, étant donné que les propriétés d'adhérence vis-à-vis d'autres supports sont relativement faibles.

Depuis cette date, de nombreuses autres propositions ont été faites pour adapter les compositions à base de polyoléfines, polypropylène notamment, en y incorporant des additifs appropriés, voir notamment US-A-4 255 323 et US-A-4 211 692. Il ressort également de ce document que ces compositions sont destinées à être appliquées sur des supports textiles réalisés dans des fibres de la même famille chimique, à savoir les polyoléfines.

A ce jour, aucune proposition satisfaisante n'a été faite permettant de réaliser aisément, selon une technologie commune, des feuilles souples, étanches, facilement conformables en conduites, gaines, vêtements, qui puissent avoir non seulement une bonne résistance au feu (classement pouvant atteindre M1), mais également une très bonne résistance à haute température (pouvant atteindre 130°C) pendant une longue durée, ainsi que des matériaux étanches revêtus d'une couche d'enduction leur permettant également de résister à l'action d'agents chimiques corrosifs, et qui par ailleurs présentent de très bonnes caractéristiques mécaniques, sont souples et peuvent être soudées thermiquement.

Or on a trouvé, et c'est ce qui fait l'objet de la présente invention, un procédé perfectionné qui permet de résoudre l'ensemble de ces problèmes et surtout autorise l'utilisation comme support textile d'un support à base de fibres chimiques autres que celles en polyoléfines, par exemple des supports à base de fibres polyester, polyamide, permettant ainsi d'obtenir des caractéristiques du complexe encore améliorées.

D'une manière générale, l'invention concerne donc un procédé de réalisation d'une feuille souple, étanche, se présentant sous la forme d'un complexe constitué par un support textile revêtu sur ses deux faces d'une couche d'enduction, l'enduit de surface étant à base d'une composition contenant du polypropylène (PP) et un composant et additifs lui conférant des propriétés spécifiques, l'association dudit support avec son revêtement étant réalisée par calandrage immédiatement en aval d'un ensemble extrudant la composition sous forme de film.

Le procédé selon l'invention se caractérise en ce que :
- le support textile est constitué par une structure dont les fils sont disposés les uns par rapport aux autres de manière à présenter des interstices entre eux aptes à autoriser la pénétration de la composition d'enduction à coeur dudit support ;
- l'association support textile/film est réalisée alors que ce dernier est encore à une température élevée, cette association étant obtenue au moyen d'une calandre comportant un rouleau lisse en acier ayant reçu un traitement de surface et un contre-rouleau caoutchouté, le renfort textile étant en contact avec la surface du rouleau caoutchouté et le film avec celle du rouleau en acier, la pression exercée par les rouleaux de la calandre contre la surface du film et du renfort textile étant telle qu'elle fait pénétrer la matière constituant le film à l'intérieur de la structure dudit renfort textile ;
- après réalisation d'une première couche d'enduction sur une face, une seconde couche est rapportée sur l'autre face d'une manière similaire en ayant soin cependant de préchauffer la première surface enduite sans cependant la ramollir.

Selon une forme préférentielle de mise en oeuvre du procédé conforme à l'invention, le support textile est de préférence constitué par une structure tricotée, avantageusement de type jersey, une telle structure facilitant la pénétration de la composition d'enduction à coeur ; dans le cas où le support serait constitué par un tissu ou un non tissé, la densité en fils de chaine et trame ou en fibres doit permettre d'obtenir une perméabilité équivalente à un tricot.

Les fils ou fibres chimiques entrant dans la constitution du support seront de préférence choisies dans des polymères autres que les polyoléfines, par exemple être en polyester ou polyamide, ce qui permet d'améliorer les propriétés du complexe final, par exemple d'augmenter sa tenue à la chaleur.

Selon deux formes de mise en oeuvre du procédé conforme à l'invention, l'enduit de surface peut être constitué :
- d'une part par une composition de polypropylène (PP) et de terpolymère d'éthylène diène ignifugé (EPDM) permettant d'obtenir un complexe particulièrement adapté pour résister à la chaleur et à la flamme ;
- et, d'autre part, dans une composition thermoplastique constituée par un mélange de polypropylène et de caoutchouc butyl permettant d'obtenir un complexe particulièrement adapté pour réaliser des ensembles étanches aux gaz et résistant à l'action d'agents chimiques corrosifs.

L'invention et les avantages qu'elle apporte sera cependant mieux comprise grâce aux deux exemples de réalisation donnés ci-après à titre indicatif mais non limitatif.

### Exemple 1 :

Pour la mise en oeuvre du procédé conforme à l'invention, on extrude, sous forme d'un film, une composition de PP/EPDM ignifugé tel que le produit commercialisé par la société MONSANTO sous la marque "SANTOPRENE", proposé à ce jour pour réaliser des objets moulés, extrudés, présentant de très bonnes résistances au feu.

Parmi les différentes références proposées par cette Société, la référence "grade : 253-36" est particulièrement appropriée lorsque l'on souhaite obtenir un classement pouvant atteindre M1. Bien entendu, d'autres références pourraient éventuellement être utilisées en fonction des applications du produit à réaliser et du classement au feu qu'il doit remplir. De préférence, une telle composition est colorée, en noir par exemple, par adjonction de noir de carbone. Bien entendu, tout autre type de coloration pourrait être envisagé.

Immédiatement à la sortie de l'extrudeuse et le plus près possible de celle-ci, est disposée une calandre comportant un cylindre métal lisse ayant reçu un traitement de surface (revêtement en polytétrafluoroéthylène) et un contre-cylindre recouvert d'un revêtement en caoutchouc.

La vitesse de la calandre est réglée de manière à produire un étirage du film entre la sortie de l'extrudeuse et la ligne de pincement dudit film entre les cylindres.

Un renfort textile constitué par un tricot jersey en polyester, est amené à l'intérieur de la calandre en prenant soin de faire passer ledit support à la surface du contre-rouleau revêtu du caoutchouc.

Sous l'action de la pression exercée entre les deux rouleaux de la calandre, le film encore chaud est forcé à l'intérieur des mailles du tricot tout en présentant une surface externe parfaitement lisse et homogène.

Après avoir ainsi réalisé l'enduction de l'une des faces du tricot, on réalise, de manière similaire, l'enduction de la seconde face, la seule différence résidant dans le fait que l'on préchauffe la première surface enduite sans cependant la ramollir.

En procédant d'une telle manière, on obtient une feuille souple, étanche, parfaitement conformable en conduites, gaines par simple soudure thermique d'une structure plane ainsi réalisée.

A titre indicatif, il a été possible de réaliser une feuille souple étanche conforme à l'invention en utilisant comme renfort textile un tricot jersey en polyester, pesant 110 g/m2 et réalisé sur un métier jauge 20, à partir de fils de 167 dtex.

Chaque face du tricot est enduite d'une composition PP/EPDM ignifugé (SANTOPRENE grade 253-36) à raison de 220 g/m2. A titre indicatif, l'épaisseur du complexe précité n'excède pas 0,4 mm, ce qui s'explique par le fait que la matière d'enduction pénètre à coeur du tricot constituant le renfort textile.

Le complexe obtenu présente une très bonne résistance au feu pouvant atteindre le classement M1 ainsi qu'une excellente résistance au délaminage et de très bonnes caractéristiques mécaniques.

Un tel produit peut être utilisé dans de nombreuses applications et notamment pour réaliser des conduits, gaines flexibles, à l'intérieur desquelles circulent des gaz, air notamment, à température élevée.

Il convient de noter que le procédé conforme à l'invention permet d'obtenir des couches d'enduction de faible grammage pouvant être inférieures à 200 g/m2.

### Exemple 2 :

On répète l'exemple 1 si ce n'est que l'on extrude, sous forme de film, une composition de polypropylène et de caoutchouc butyl, tel que le produit commercialisé par la Société A E S sous la dénomination "TREFSIN". Une telle composition, éventuellement colorée ou chargée en vue de la rendre ignifuge, est extrudée sous la forme d'un film, la température en sortie de filière étant d'environ 200°C.

Comme dans l'exemple précédent, on associe au film un renfort textile constitué dans le cas présent par un tricot jersey en polyester, pesant 110 g/m2 similaire à l'exemple 1, en l'amenant à l'intérieur de la calandre en prenant soin de faire passer ledit support à la surface du contre-rouleau revêtu de caoutchouc.

Après réalisation d'une première couche d'enduction à raison de 250 g/m2, on enduit l'autre face d'une manière similaire si ce n'est que l'on préchauffe la première surface enduite sans cependant la ramollir.

On obtient ainsi des feuilles souples pesant 610 g/m2, ayant une épaisseur de 0,4 mm, étanches aux gaz, et résistantes aux milieux agressifs (milieux acides notamment). De telles feuilles sont parfaitement conformables, par exemple sous la forme de vêtements, conduites ou gaines, par simple soudure thermique.

## Revendications

1. Procédé de réalisation d'une feuille souple, étanche, se présentant sous la forme d'un complexe constitué par un support textile revêtu sur ses deux faces d'une couche d'enduction, l'enduit de surface étant à base d'une composition contenant du polypropylène (PP) et un composant et additifs lui conférant des propriétés spécifiques, l'association dudit support avec son revêtement étant réalisée par calandrage immédiatement en aval d'un ensemble extrudant la composition sous forme de film, caractérisé en ce que :
- le support textile est constitué par une structure dont les fils sont disposés les uns par rapport aux autres de manière à présenter des interstices entre eux aptes à autoriser la pénétration de la composition d'enduction au coeur dudit support ;
- l'association support textile/film est réalisée alors que ce dernier est encore à une température élevée, cette association étant obtenue au moyen d'une calandre comportant un rouleau lisse en acier ayant reçu un traitement de surface et un contre-rouleau caoutchouté, le renfort textile étant en contact avec la surface du rouleau caoutchouté et le film avec celle du rouleau en acier, la pression exercée par les rouleaux de la calandre contre la surface du film et du renfort textile étant telle qu'elle fait pénétrer la matière constituant le film à l'intérieur de la structure dudit renfort textile ;
- après réalisation d'une première couche d'enduction sur une face, une seconde couche est rapportée sur l'autre face d'une manière similaire en ayant soin cependant de préchauffer la première surface enduite sans cependant la ramollir.

2. Procédé selon la revendication 1, caractérisé en ce que le support textile est constitué par une structure tricotée, de type jersey, les fils chimiques entrant dans la constitution dudit tricot étant à base de polymère autres que les polyoléfines, tels que polyester ou polyamide.

3. Procédé selon l'une des revendications 1 et 2, caractérisé en ce que l'enduit de surface est constitué par une composition de polypropylène (PP) et de terpolymère d'éthylène propylène diène ignifugé (EPDM) permettant d'obtenir une feuille souple, étanche et résistante à la chaleur et à la flamme.

4. Procédé selon l'une des revendications 1 et 2, caractérisé en ce que l'enduit de surface est constitué par une composition de polypropylène et de caoutchouc butyl permettant d'obtenir une feuille souple, étanche aux gaz et résistante aux produits chimiques.

5. Procédé selon la revendication 3, caractérisé en ce que l'enduit de surface est coloré au moyen de noir de carbone.

## Claims

1. Process for producing a flexible and impermeable sheet, being in the form of a complex consisting of a textile support coated on both sides with a coating layer, the surface coating being based on a composition containing polypropylene (PP) and a component and additives imparting to it specific properties, the said support being combined with its coating by calendering immediately downstream of an assembly extruding the composition in the form of film, characterized in that :
- the textile support consists of a structure of which the yarns are arranged with respect to one another so as to have, between them, interstices capable of allowing penetration of the coating composition into the core of the said support ;
- the textile support/film combination is produced while the film is still at a high temperature, this combination being obtained by means of a calendar which includes a smooth surface-treated steel roll and a rubberized counter-pressure roll, the textile reinforcement being in contact with the surface of the rubberized roll and the film being in contact with the surface of the steel roll, the pressure exerted by the calender rolls against the surface of the film and of the textile reinforcement being such that it causes the material of which the film is composed to penetrate into the structure of the said textile reinforcement ;
- after producing a first coating layer on one side, a second layer is added on the other side in a similar manner, taking care, however, to preheat the first coated surface, without, however, softening it.

2. Process according to claim 1, characterized in that the textile support consists of a knitted structure, of the Jersey type, the chemically-made yarns used in the construction of the said knitted fabric being based on polymers other than polyolefins, such as polyester or polyamide.

3. Process according to either of claims 1 and 2, characterized in that the surface coating consists of a composition based on polypropylene (PP) and on a fire-retarded ethylene-propylene-diene terpolymer (EPDM) enabling a sheet to be obtained which is flexible, impermeable, heat-resistant and flame-resistant.

4. Process according to either of claims 1 and 2, characterized in that the surface coating consists of a composition based on polypropylene and on butyl rubber enabling a sheet to be obtained which is flexible, gas-impermeable and resistant to chemicals.

5. Process according to claim 3, characterized in that the surface coating is colored by means of carbon black.

## Patentansprüche

1. Verfahren zur Herstellung einer biegsamen, dichten Folie, welche die Form eines Verbundstoffes aufweist, der aus einem beidseitig mit einer Beschichtung versehenen Textilträger besteht, wobei die Oberflächenbeschichtung aus einer Zusammensetzung gebildet ist, welche Polypropylen (PP) enthält sowie einen Bestandteil und Zusatzstoffe, die ihr spezifische Eigenschaften verleihen, und wobei die Verbindung zwischen dem genannten Träger und seiner Beschichtung durch Kalandrieren unmittelbar hinter einer Anordnung, welche die Zusammensetzung in Form eines Films extrudiert, erhalten wird, **dadurch gekennzeichnet**, daß
- der Texilträger aus einer Struktur besteht, deren Fäden derart zueinander angeordnet sind, daß zwischen ihnen Zwischenräume vorhanden sind, welche geeignet sind, das Eindringen der Beschichtungs-Zusammensetzung in das Innere des genannten Trägers zu ermöglichen;
- die Verbindung zwischen Textilträger und Film ausgeführt wird, wenn der letztere noch eine hohe Temperatur aufweist, wobei diese Verbindung mittels eines Kalanders erhalten wird, der eine glatte, einer Oberflächenbehandlung unterzogene Stahlwalze und eine mit Gummi überzogene Gegenwalze umfaßt, wobei die Textilverstärkung mit der Oberfläche der mit Gummi überzogenen Walze und der Film mit der der Stahlwalze in Berührung steht und wobei die Walzen des Kalanders auf die Oberfläche des Films und der Textilverstärkung einen derartigen Druck ausüben, daß dadurch das den Film bildende Material in das Innere der Struktur der genannten Textilverstärkung eindringt;
- nach Ausführung einer ersten Beschichtung auf einer Seite eine zweite Schicht auf ähnliche Weise auf die andere Seite aufgebracht wird, wobei dafür Sorge getragen wird, daß die erste, beschichtete Oberfläche vorgewärmt wird, ohne sie dabei aufzuweichen.

2. Verfahren nach Anspruch 1, **dadurch gekennzeichnet**, daß der Textilträger aus einer jerseyartigen gewirkten Struktur besteht, wobei die die genannte Wirkware bildenden chemischen Fasern aus einem von Polyolefinen verschiedenen Polymer, wie Polyester oder Polyamid, bestehen.

3. Verfahren nach einem der Ansprüche 1 und 2, **dadurch gekennzeichnet**, daß die Oberflächenbeschichtung aus einer Zusammensetzung aus Polypropylen (PP) und einem feuerfest gemachten Terpolymer aus Ethylen, Propylen und Dien (EPDM) besteht, wodurch eine biegsame, dichte und hitze- und flammenbeständige Folie erhalten wird.

4. Verfahren nach einem der Ansprüche 1 und 2, **dadurch gekennzeichnet**, daß die Oberflächenbeschichtung aus einer Zusammensetzung aus Polypropylen und Butylkautschuk besteht, wodurch eine biegsame, gasdichte und gegen chemische Erzeugnisse widerstandsfähige Folie erhalten wird.

5. Verfahren nach Anspruch 3, **dadurch gekennzeichnet**, daß die Oberflächenbeschichtung mittels Ruß gefärbt wird.
